# NEW EUROPEAN PATENT SPECIFICATION

(11) **EP 1 637 887 B2**
(45) Date of publication and mention of the opposition decision: **06.06.2012**
(45) Mention of the grant of the patent: 15.07.2009
(21) Application number: 05255351.8
(22) Date of filing: 01.09.2005
(51) Int. Cl.: G01N 35/00, B01L 99/00, G01N 35/10, B08B 3/12

(54) **Plate washing system utilising ultrasonic cleaning for pipes**
Vorrichtung zum Spülen von Titerplatten umfassend ultraschallreinigen von Leitungen
Dispositif pour le lavage de plaques de titration avec nettoyage ultrasonique des tubulures

(30) Priority: 14.09.2004 US 939467; 19.07.2005 US 183867
(43) Date of publication of application: 22.03.2006
(60) Divisional application: 09159456.4
(73) Proprietor: BTI Holdings, Inc., Winooski, VT 05404-0998 (US)
(72) Inventor: Buehrer, Lenore, Burlington, Vermont 05401 (US); Cleveland, Thomas A., Colchester, Vermont 05446 (US); Gifford, Robert M., Starksboro, Vermont 05489 (US)
(74) Representative: Driver, Virginia Rozanne

(56) References cited:
- US-A- 5 951 783
- US-B1- 6 212 949
- PATENT ABSTRACTS OF JAPAN vol. 014, no. 001 (P-985), 8 January 1990 (1990-01-08) & JP 01 254871 A (TOSOH CORP), 11 October 1989 (1989-10-11)

## Description

This invention generally relates to a plate washing system with ultrasonic cleaning of pipes. The ultrasonic cleaning system can provide cleaning of the plate washing system's dispense and aspirate pipes, and monitor the performance in terms of volumetric accuracy (dispense) and aspiration efficiency.

Certain laboratory operations, such as immuno assays, require the testing of small samples which are carried out in an arrangement of microwells or wells having volumes of, for example, 50-300 microliters or less formed in microtiter plates, hereinafter referred to generically as well plates. An example of this type of laboratory operation is an enzyme linked immunosorbent assay ("ELISA") reaction which is performed for measuring the presence or absence of an antigens/ antibodycomplex formed within the wells of the well plate.

Reactions of this type involve the adding and removing of liquid reagents within each well. Intentionally, some of the components in the reagent chemically bond to the well. Therefore, at several stages of the reactions, the unbound liquid and components remaining in the wells must be removed and the inside of the wells must be washed by dispensing a wash solution such as water, a buffer solution, or other fluid in the wells using a gravity feed or a pump, and then evacuating the liquid under a vacuum.

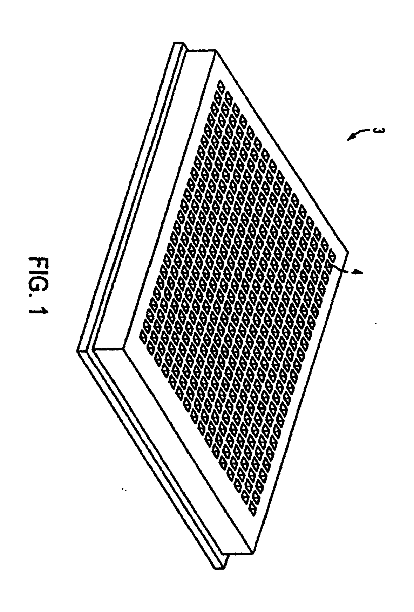

The wells can be arranged in a strip or in-line format, or can be arranged in a matrix format. Until recently, commonly used matrices were configured to have 8 x 12 wells spaced at 9 mm apart between centers, hereinafter referred to as a 96-well plate. However, with the advent of high throughput screening ("HTS"), two more matrixes were introduced which increased the total number of wells while keeping the overall size of the well plate the same: 1) the 384-well plate 3, as shown in FIG. 1, configured to have 16 x 24 wells 4 spaced at 4.5 mm apart between centers, and 2) the 1536-well plate configured to have 32 x 48 wells spaced at 2.25 mm apart between centers (not shown). Since the overall foot print of these new well plates are the same as the 96-well plate, the size of the wells in the new microtiter well plates is necessarily smaller than those in the 96-well plates while the depth of the wells remains generally the same. However, this is not always the case.

A conventional washer used for removing the unbound contents in wells of a well plate includes dispense pipes for dispensing the wash solution into the wells of the well plate (e.g., by a pump or gravity feed), and aspirate pipes for evacuating the solution from the wells of the well plate (e.g., by a vacuum or a suction device). In order to quickly wash the well plates, the washing process is performed simultaneously on as many wells of the well plate as possible. A commercial example of such a microplate washer is the Tecan PW384.

In order to accommodate the well plates having smaller wells, the dispense and aspirate pipes must have small diameters. However, as a result of evaporation, the dispensed materials leave solid materials (such as salts from the assay reagents) within the pipes. The solid material residue can impact the performance of the pipes or even render the pipes inoperable. Impact on performance issues is currently not detectable within the Microplate washing system and requires external instrumentation to detect volumetric dispense and aspiration errors.

Ultrasonic cleaning techniques have been used to remove the residual material from the aspirate and dispense pipes and return the pipes to an operative condition. These ultrasonic cleaning techniques use a commercially available tank of suitable size to allow immersion of the impaired pipe assemblies. Reference is made to JP-01254871 (Tosoh Corporation) which describes a washing tank for laboratory nozzle cleaning incorporating an ultrasonic generator.

Although the use of ultrasonic cleaning is effective, ultrasonic cleaning using a commercially available tank is a complex process, it requires the addition of cleaning liquid in order to fill the tank, disassembly of the pipe assemblies from the microtiter plate washing system before the pipe assembly is inserted into the tank, and removal of the waste material once the cleaning process has been completed.

It is, therefore, desirable to provide a plate washing system having an ultrasonic cleaning system that simplifies the cleaning process and is able to verify function.

According to one aspect of the invention there is provided a plate washing system comprising: at least one manifold having a plurality of pipes configured to be provided within wells of a plate in order to wash the wells; a tank that is capable of being filled with a fluid; and means for moving at least one of the manifold and tank to position the tips of the plurality of pipes within the tank; characterised by: an ultrasonic transducer mounted to the tank; and a control system, wherein when tips of said plurality of pipes are positioned within the tank, the control system activates the ultrasonic transducer in order to vibrate the fluid within the tank; at least one sensing probe or transducer that determines a level of fluid within one or more of said wells of the plate; and sensor electronics that determine if volumetric function of the pipes has been impaired based on the sensed level of fluid, by ascertaining the volumetric content of a well using the individual sensing probes or transducers to thereby detect an impaired dispense pipe or aspirate pipe.

The advantages, nature and various additional features of the invention will appear more fully upon consideration of the illustrative embodiment of the invention which is schematically set forth in the drawings, in which:
FIG. 1 is a perspective view of a conventional titer plate having 384 wells arranged in a 16 x 24 matrix;
FIG. 2 is a schematic drawing of an embodiment of the system for cleaning a well plate washing system's dispense and aspirate pipes by using ultrasonic vibrations;
FIG. 3 is a schematic of a first embodiment of the well plate washing system;
FIG. 4 is a schematic of a second embodiment of the well plate washing system in which multiple cleaning solutions are used;
FIG. 5 is a schematic of a third embodiment of the well plate washing system having tank fill and aspirate ports; and
FIGs. 6A and 6B illustrate the use of level sensing technology to determine volumetric or aspirate function of each well.

While the invention is open to various modifications and alternative forms, specific embodiments thereof are shown by way of examples in the drawings and are described herein in detail. There is no intent to limit the invention to the particular forms disclosed.

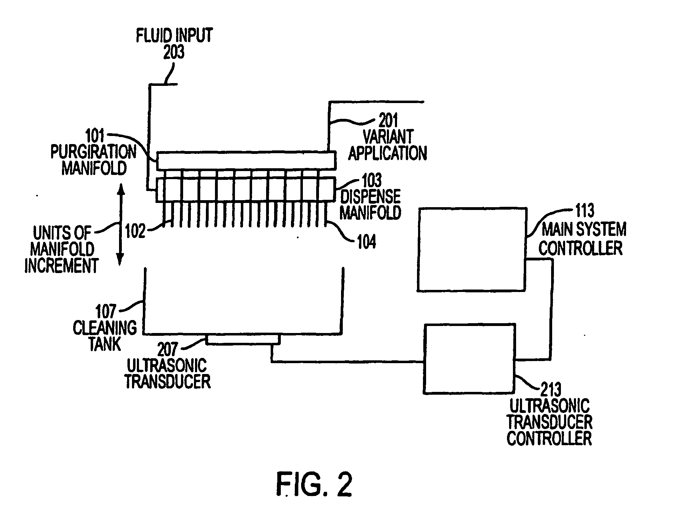

FIG. 2 generally shows a first non-limiting embodiment of an ultrasonic cleaning system of a plate washing system. The ultrasonic cleaning system includes a dispense manifold 103 having dispense pipes 102, an aspiration manifold 101 having aspirate pipes 104, a fluid input line 203, a vacuum aspiration line 201, a cleaning tank 107, and an ultrasonic transducer 207 mounted on the tank 107. However, the invention is not limited to separate dispense and aspiration manifolds and a single manifold containing both aspirate and dispense pipes can also be used.

In order to clean the pipes, the dispense and aspiration manifolds 103, 101 are lowered so that the pipes 102, 104 are within the cleaning tank 107. However, the invention is not limited in this respect. For example, instead the tank 107 could be raised to the level of the pipes 102, 104.

Then, a fluid is introduced into the cleaning tank 107 by the dispense pipes 102 in order to fill the tank 107 with fluid. This fluid can be, for example, a mild detergent or de-ionized water, as is discussed in detail below. However, the invention is not limited by the type of fluid.

The aspiration manifold 103 either draws the fluid from the tank 107 into the aspirate pipes 104 or vents the aspirate pipes 102 to atmospheric pressure. Either way, the aspirate pipes 104 can be filled with the fluid in the tank.

Once the tank 107 and pipes 102, 104 are filled with fluid, the ultrasonic transducer 207 is activated, or energized, causing the fluid in the tank 107 to vibrate. Since the tips of the pipes 102, 104 are submerged in the fluid, the vibration allows the fluid to fill and clean the dispense and aspirate pipes 102, 104. Once the cleaning has taken place, the aspirate pipes 104 are used to evacuate the cleaning tank 107.

A control system, including a main system controller 113 and ultrasonic transducer controller 213, automatically controls the movement of the pipes 102, 104, the dispensing of the fluid into the tank 107, the activation of the ultrasonic transducer 207, and the evacuation of the tank 107. However, the invention is not limited in this respect and additional controllers or a single controller could also be used.

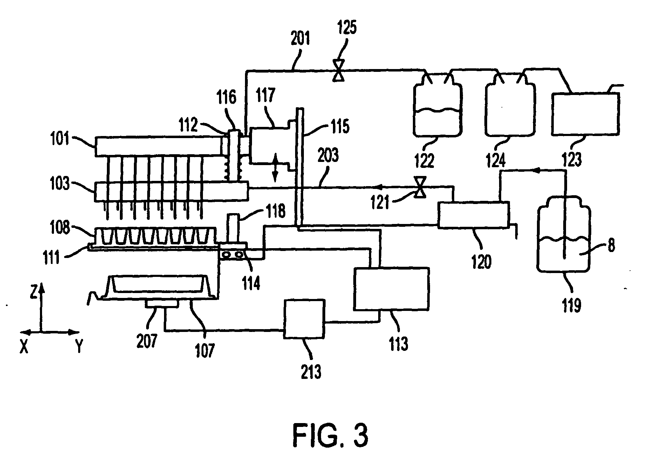

Thus far, the discussion has been directed to the ultrasonic cleaning of the dispensing and aspirate pipes. FIG. 3 shows additional features of a non-limiting embodiment of the overall system for washing a microtiter well plate. In addition, a non-limiting method of cleaning a microtiter well plate, will be described below with respect to the microtiter plate washing system shown in FIG. 3.

A microtiter well plate 108 is positioned on a well plate support mechanism or carrier 111 which in turn is moved into a washing position by the support mechanism positioning system 114 connected to the main system controller 113. However, the invention is not limited by the type of support 111. The support mechanism positioning system is also used to index the support plate in the horizontal X-Y plane relative to the manifolds during a washing operation as required. Alternatively, a drive mechanism for moving the top manifold 101 and bottom manifold 103 in the X-Y plane can be used to achieve the desired relative motion during a wash operation.

In accordance with this embodiment, the bottom manifold 103 is the dispense manifold, which is slaved to the top aspirate manifold 101. However, the invention is not limited in this respect. The aspirate manifold 101 is lowered and raised along the linear guide way 115 along the z-axis by a driving mechanism 117 connected to the main system controller 113. The dispense manifold 103 is suspended from the aspirate manifold 101 by a linear guide 116 and stopped from descending beyond a predetermined position relative to top manifold by a first stop 112. Furthermore, a second stop 118 is provided on the support mechanism 111 for preventing the dispense manifold 103 from entering into the small wells during a wash operation as the aspirate manifold 101 is lowered to evacuate the wells. In order to clean the wells, a wash solution 8 is delivered into the dispense manifold from a source container 119 by means of a pump 120 and a valve 121 through the fluid input line 203. The wash solution 8 is removed from the aspirate manifold 101 through the vacuum aspiration line 201 into a waste container 122 which is separated from a vacuum pump 123 by a trap 124. An opening valve 125 connects the aspirate manifold 101 to the waste container.

When it is desired to clean the aspirate and dispense pipes 102, 104, the support mechanism 111 and second stop 118 are moved out of the way and placed in a home position. The main system controller 113 then lowers the top manifold 101 and bottom manifold 103, allowing their respective pipes to be lowered into the cleaning tank 107. Once the pipes 102, 104 are in position, the dispense pipes 102 provide a fluid to the tank 107, and the pipes 102, 104 are cleaned by the ultrasonic vibrations of the fluid within the tank 107, as is discussed in detail above with respect to FIG. 2.

In the pictured embodiment, the ultrasonic transducer 207 is mounted to the cleaning tank 107 with adhesive. However, the invention is not limited in this respect. For example, the transducer 207 can be mechanically attached to the cleaning tank 107 with a threaded attachment.

The ultrasonic transducer 207 includes a ceramic material that changes dimensions due to the piezoelectric effect when a voltage is applied to the ceramic material. When an alternating voltage at a frequency is applied to the ceramic material, the ceramic material vibrates at that frequency. If the transducer 207 is bonded to the tank 107 filled with liquid, the tank 107 also vibrates and the energy of vibration of the tank 107 can cause small bubbles to form and collapse throughout the liquid. The action of the bubbles collapsing (i.e., cavitation) provides cleaning of the tips of the pipes 102, 104 within the fluid.

In accordance with the first embodiment of the present invention, the main system controller 113 and ultrasonic transducer controller 213 automatically control the cleaning of the ultrasonic transducer 207 in accordance with a pre-programmed cleaning cycle. That is, the controllers 113, 213 can control the times when the pipes 104, 102 are cleaned and can control the duration of soaking of the pipes 104, 102.

For example, the ultrasonic transducer controller 213 or main system controller 113 controls the processes of filling the tank 107, lowing the manifolds 101, 103 (or single manifold), turning on the ultrasonic transducer 207, and evacuating the tank 107. In addition, the controllers 113, 213 can control whether this cleaning cycle is repeated and can control when the cleaning cycles occur.

Furthermore, the controllers 113, 213 can control fluid changes. For example, according to a preferred embodiment of the invention, the pipes 102, 104 are cleaned with a mild detergent and then rinsed with de-ionized water (DiH2O). First, the pipes are cleaned with the detergent, which reduces the surface tension in the water. This reduced surface tension increases cavitation and, as such, provides more cleaning action. Then, the pipes are rinsed with DiH2O.

According to the first embodiment, a single source container 119 is used for the well wash solution, detergent, and DiH2O. Therefore, whenever a change of the fluid within the source is required, the controllers 113, 213 cause a notification to be provided an operator.

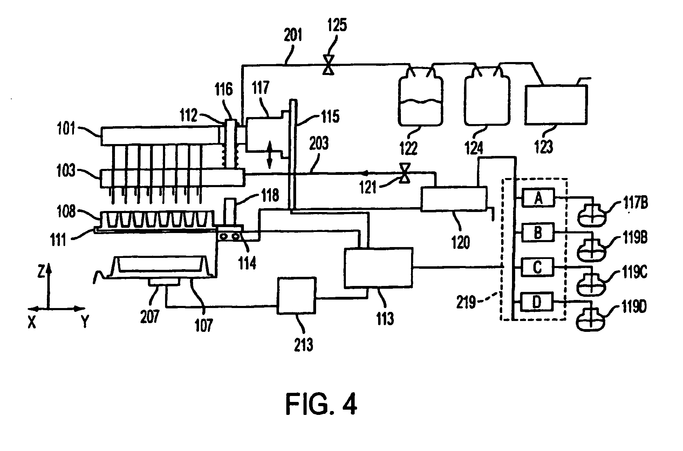

Alternatively, according to a second non-limiting embodiment shown in FIG. 4, an external valve box 219 can be used. This valve box includes valves A-D, which are connected to multiple source containers 219A-D. If multiple source containers are used, then the controllers 113, 213 also control the dispensation of the appropriate fluid (e.g., well wash solution, detergent, or DiH2O).

In addition, the ultrasonic transducer controller 213 can control the voltage and frequency of the applied ultrasonic voltage. It is preferred that the applied voltage is 30 to 300V with a frequency of 40-100 kHz. For example, according to one design, the ultrasonic controller 213 uses 48 VDC and creates an ultrasonic signal at the transducer of ±300V at 50 kHZ. However, the invention is not limited in this respect.

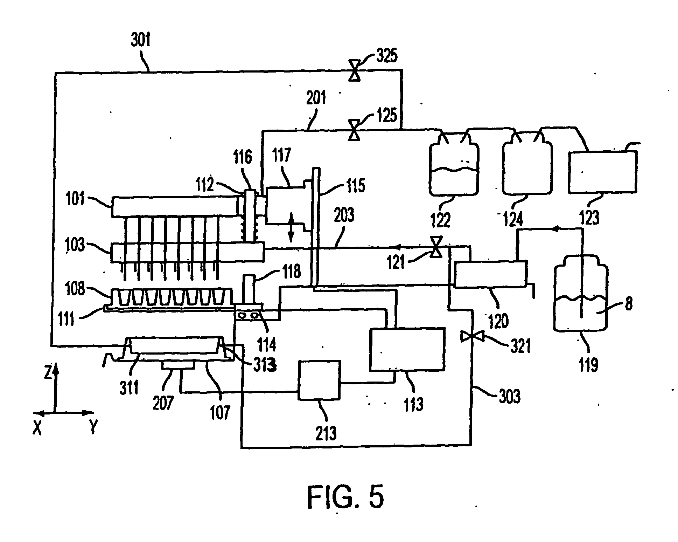

Finally, according to a third non-limiting embodiment shown in FIG. 5, the fluids used for cleaning of the tubes (e.g., detergent and DiH2O) can be introduced to and evacuated from the tank 107 through ports 313, 311. Dispense and aspirate lines 303, 301, with valves 321, 325, provide the appropriate fluid from the source container (e.g., 119 or one of 119A-D). Again, the controllers 113, 213 can control the dispensation and evacuation of fluid.

According to another non-limiting embodiment of the invention, the relative depths of fluid within the wells 4 of the microplate 3 are sensed in order to monitor whether the dispense or aspirate operations can are functioning properly. The sensing of proper functioning of the dispense or aspirate operations can be applied manually at the operator's discretion, or can be part of a maintenance operation in which the plate washer automatically performs a cleaning operation of the aspirate and/or dispensing pipes 102, 104 until the desired performance is achieved. Non-limiting examples of liquid level sense technology that can be used to determine volumetric performance issues on board the micro plate washing system are capacitive, ultrasonic, optical or direct contact measurement.

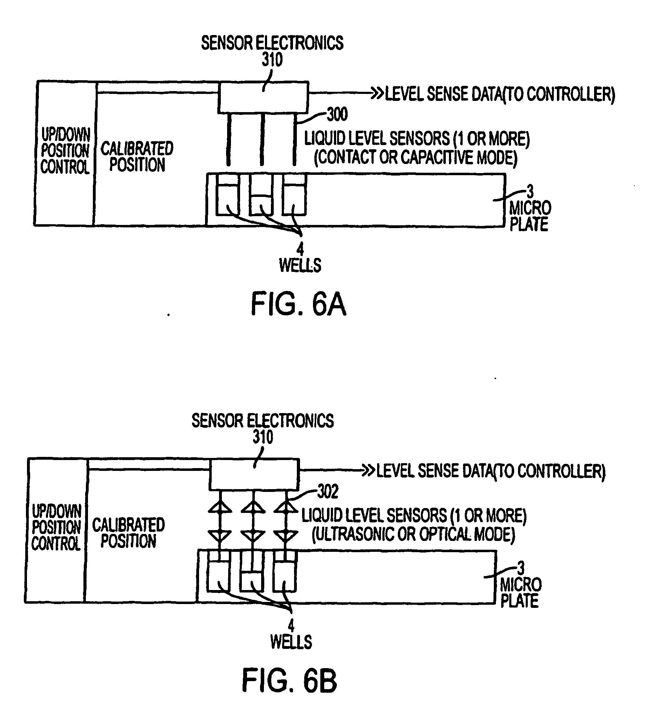

FIGs. 6A and 6B illustrate the use of level sensing system that determines volumetric or aspirate function of the wells 4. The level sensing system can include at least one sensing probe 300 or transducer 302 that determines a level of fluid within one or more of the wells 4 and sensor electronics 310 that determine if volumetric function has been impaired based on the sensed level of fluid. By ascertaining the volumetric content of a well 3 using the individual sensing probes 300 or transducers 302, an impaired dispense pipe 102 or aspirate pipe 104 can be detected.

FIG. 6A illustrates a contact or capacitive sensing probe 300. At least one probe 300 is lowered from a calibrated position to a measurement position where the liquid level within the wells 3 is detected. The one or more probes 300 can be moved to detect the level other wells 3. For example, the one or more probes 300 can be moved so that it is used in adjacent wells 3, allowing the one or more probes 300 to check an entire micro plate matrix. More than one axis of motion is required to accomplish this function. For example, the probes 300 could be in one axis, e.g., moved up and down, and the plate 4 could be moved in the X and Y directions in order to position the one or more probes 300 at the locations for sensing the liquid level in the various wells 3.

FIG. 6B illustrates an optical or ultra sonic sensing transducer 302. Using the optical or ultrasonic transducer 302 is similar to that of the using the probes 300 shown in FIG. 6A. However, the at least one transducer 302 can be lowered from a calibrated position to a measurement position or can remain at a fixed position where the liquid level within the wells 3 is detected.

Sensor electronics 310 can automatically or manually enable cleaning of at least one of the pipes 102, 104 until volumetric function has been restored via repeated processes. Moreover, the sensor electronics 310 can provide a microplate washing process that includes a background task of volumetric verification where a designated zone of said plate is set aside for the purpose of testing volumetric function, or the sensor electronics can provide volumetric function as a maintenance operation aside from normal operations.

## Claims

1. A plate washing system, comprising:
at least one manifold (101,103) having a plurality of pipes (102,104) configured to be provided within wells (4) of a plate (3) in order to wash the wells;
a tank (107) that is capable of being filled with a fluid; and
means for moving at least one of the manifold and tank to position the tips of the plurality of pipes within the tank; **characterised by**
an ultrasonic transducer (207) mounted to the tank; and
a control system (113,213), wherein when tips of said plurality of pipes (102,104) are positioned within the tank (107), the control system (113,213) activates the ultrasonic transducer (207) in order to vibrate the fluid within the tank;
at least one sensing probe (300) or transducer (302) that determines a level of fluid within one or more of said wells of the plate; and
sensor electronics (310) that determine if volumetric function of the pipes has been impaired based on the sensed level of fluid, by ascertaining the volumetric content of a well (3) using the individual sensing probes (300) or transducers (302) to thereby detect an impaired dispense pipe (102) or aspirate pipe (104).

2. The system of claim 1, wherein the control system (113,213) controls movement of at least one of the manifold (101,103) and the tank (107) in order to position the tips of the pipes (102,104) within the tank.

3. The system of claim 1, wherein the control system (113,213) automatically controls movement of at least one of the at least one manifold (101,103) and the tank (107) so that the plurality of pipes (102,104) are positioned within the tank, and automatically activates the ultrasonic transducer (207) in order to vibrate the fluid within the tank.

4. The system of claim 3, wherein said plate is a microtiter plate (3).

5. The system of claim 1, wherein said plurality of pipes includes a plurality of dispense pipes (102), wherein said control system controls the dispense pipes so that the dispense pipes dispense the fluid within the tank.

6. The system of claim 5, wherein the plurality of pipes further include a plurality of aspirate pipes (104) so that the aspirate pipes evacuate the fluid from the tank.

7. The system of claim 1, wherein the control system (113,213) is programmed to automatically control at least one of the following operations: fluid changes, the duration of soaking of the pipes and the times when the pipes are cleaned.

8. The system of claim 6, wherein the control system (113,213) is programmed to control at least one of the following operations: fluid changes, the duration of soaking of the pipes and the times when the pipes are cleaned.

9. The system of claim 1, wherein when the ultrasonic transducer (207) is activated, a voltage of amplitude and frequency is applied to the ultrasonic transducer so as to vibrate the tank (107) and cause small bubbles to form and collapse throughout the fluid thereby cleaning the pipes (102,104).

10. The system of claim 9, wherein the applied voltage is 30-300 Volts and has a frequency of 40-100 kHz.

11. The system of claim 6, wherein the control system (113,213) is programmed to control filling and evacuation of the tank (107).

12. The system of claim 1, wherein the control system (113,213) is programmed to automatically control filling and evacuation of the tank (107).

13. The system of claim 12, wherein said tank (107) includes a fill port (313) and an aspirate port (311), said fluid being introduced into the tank through the fill port and said fluid being evacuated from the tank through the aspirate port, wherein the fill port is separate from the aspirate port.

14. The system of claim 1, wherein said sensor electronics (310) automatically enable repeated cleaning of at least one of said plurality of pipes (102,104) until volumetric function of the pipes has been restored.

15. The system of claim 1, wherein said sensor electronics (310) manually enable repeated cleaning of at least one of said plurality of pipes (102,104) until volumetric function of the pipes has been restored.

16. The system of claim 1, wherein said sensor electronics (310) provide a plate washing process where a designated zone of said plate is set aside for the purpose of testing volumetric function of the pipes.

17. The system according to claim 1, further comprising a fluid input line (203) for delivering the fluid to the at least one manifold (103) for introducing the fluid into the tank (107) and a vacuum aspiration line (201) for removing fluid from the at least one manifold (101) for drawing the fluid from the tank (107).

18. The system according to claim 17, wherein the fluid input line (203) and the vacuum aspiration line (103) are also used to wash the wells.

19. The system according to claim 1, wherein the control system (113,213) is programmed to control washing of the wells (4) and cleaning of the pipes (102,104).

20. The system of claim 19, wherein the control system (113,213) is programmed to automatically control cleaning of the pipes (102,104) with a preprogrammed cleaning cycle.

21. The system according to claim 1, wherein the plate (3) is a matrix of wells (4).

## Patentansprüche

1. Ein Plattenwaschsystem mit:
wenigstens einem Verteiler (101, 103) mit einer Mehrzahl von Leitungen (102, 104), die dazu ausgestaltet sind, In Kavitäten (4) einer Platte (3) vorgesehen zu werden, und die Kavitäten zu waschen;
einem Tank (107), der mit einem Fluid gefüllt werden kann; und
Mitteln zum Bewegen des Verteilers und/oder des Tanks, um die Spitzen der Mehrzahl von Leitungen innerhalb des Tanks zu positionieren; **gekennzeichnet durch**
einen Ultraschalltransducer (207), der an dem Tank angebracht ist; und
einem Steuersystem (113, 213), wobei dann, wenn Spitzen der Mehrzahl von Leitungen (102, 104) innerhalb des Tanks (107) positioniert sind, das Steuersystem (113, 213) den Ultraschalltransducer (207) aktiviert, um das Fluid innerhalb des Tanks zu vibrieren;
wenigstens einem Messfühler (300) oder Transducer (302), der ein Fluidniveau innerhalb einer oder mehrerer der Kavitäten der Platte bestimmt; und
einer Sensorelektronik (310), die auf der Basis des erfassten Fluidniveaus festlegt, ob eine volumetrische Funktion der Leitungen gestört wurde, indem der volumetrische Gehalt einer Kavität (3) mit Hilfe der einzelnen Messfühler (300) oder Transducer (302) bestimmt wird, um **dadurch** eine beschädigte Abgabeleitung (102) oder Ansaugleitung (104) zu detektieren.

2. Das System nach Anspruch 1,
wobei das Steuersystem (113, 213) die Bewegung des Verteilers (101, 103) und/oder des Tanks (107) steuert, um die Spitzen der Leitungen (102, 104) innerhalb des Tanks zu positionieren.

3. Das System nach Anspruch 1,
wobei das Steuersystem (113, 213) die Bewegung des wenigstens einen Verteilers (101, 103) und/oder des Tanks (107) automatisch so steuert, dass die Mehrzahl von Leitungen (102, 104) innerhalb des Tanks positioniert werden, und den Ultraschalltransducer (207) automatisch aktiviert, um das Fluid innerhalb des Tanks zu vibrieren.

4. Das System nach Anspruch 3, wobei die Platte eine Mikrotiterplatte (3) ist.

5. Das System nach Anspruch 1,
wobei die Mehrzahl von Leitungen eine Mehrzahl von Abgabeleitungen (102) umfasst, wobei das Steuersystem die Abgabeleitungen so steuert, dass die Abgabeleitungen das Fluid innerhalb des Tanks abgeben.

6. Das System nach Anspruch 5, wobei die Mehrzahl von Leitungen außerdem eine Mehrzahl von Ansaugleitungen (104) umfasst, so dass die Ansaugleitungen das Fluid aus dem Tank evakuieren.

7. Das System nach Anspruch 1, wobei das Steuersystem (113, 213) so programmiert ist, dass es wenigstens eine der folgenden Operationen automatisch steuert: Fluidänderungen, die Dauer des Tränkens der Leitungen und die Zeiten, wenn die Leitungen gereinigt werden.

8. Das System nach Anspruch 6, wobei das Steuersystem (113, 213) so programmiert ist, dass es wenigstens eine der folgenden Operationen steuert: Fluidänderungen, die Dauer des Tränkens der Leitungen und die Zeiten, wenn die Leitungen gereinigt werden.

9. Das System nach Anspruch 1,
wobei dann, wenn der Ultraschalltransducer (207) aktiviert ist, eine Spannung mit einer solchen Amplitude und Frequenz auf den Ultraschalltransducer aufgebracht wird, dass der Tank (107) vibriert wird und kleine Bläschen in dem Fluid ausgebildet und zerstört werden, wodurch die Leitungen (102, 104) gereinigt werden.

10. Das System nach Anspruch 9, wobei die aufgebrachte Spannung 30 bis 300 Volt beträgt und eine Frequenz von 40 bis 100 kHz aufweist.

11. Das System nach Anspruch 6, wobei das Steuersystem (113, 213) so programmiert ist, dass es das Füllen und Entleeren des Tanks (107) steuert.

12. Das System nach Anspruch 1,
wobei das Steuersystem (113, 213) so programmiert ist, dass es das Füllen und Entleeren des Tanks (107) automatisch steuert.

13. Das System nach Anspruch 12, wobei der Tank (107) einen Füllanschluss (313) und einen Ansauganschluss (311) aufweist, wobei das Fluid in den Tank durch den Füllanschluss eingeführt wird und das Fluid aus dem Tank durch den Ansauganschluss evakuiert wird, wobei der Füllanschluss getrennt von dem Ansauganschluss ist.

14. Das System nach Anspruch 1, wobei die Sensorelektronik (310) automatisch das wiederholte Reinigen wenigstens einer der Mehrzahl von Leitungen (102, 104) ermöglicht, bis die volumetrische Funktion der Leitungen wieder hergestellt ist.

15. Das System nach Anspruch 1, wobei die Sensorelektronik (310) manuell das wiederholte Reinigen wenigstens einer der Mehrzahl von Leitungen (102, 104) ermöglicht, bis die volumetrische Funktion der Leitungen wieder hergestellt ist.

16. Das System nach Anspruch 1, wobei die Sensorelektronik (310) einen Plattenwaschprozess ermöglicht, wobei eine designierte Zone der Platte zum Zweck der Untersuchung der volumetrischen Funktion der Leitungen beiseite gelegt wird.

17. Das System nach Anspruch 1 , außerdem umfassend eine Fluidzufuhrleitung (203) zum Liefern des Fluides zu dem wenigstens einen Verteiler (103), um das Fluid in den Tank (107) einzuführen, und eine Vakuumansaugleitung (201) zum Entfernen von Fluid aus dem wenigstens einen Verteiler (101), um das Fluid aus dem Tank (107) abzuziehen.

18. Das System nach Anspruch 17, wobei die Fluidzufuhrleitung (203) und die Vakuumansaugleitung (103) auch zum Waschen der Kavitäten verwendet werden.

19. Das System nach Anspruch 1,
wobei das Steuersystem (113, 213) so programmiert ist, dass es das Waschen der Kavitäten (4) und das Reinigen der Leitungen (102, 104) steuert.

20. Das System nach Anspruch 19, wobei das Steuersystem (113, 213) so programmiert ist, dass es das Reinigen der Leitungen (102, 104) mit einem vorprogrammierten Reinigungszyklus automatisch steuert.

21. Das System nach Anspruch 1,
wobei die Platte (3) eine Matrix von Kavitäten (4) ist.

## Revendications

1. Système de lavage de plaque, comprenant :
au moins un distributeur (101, 103) ayant une pluralité de tuyaux (102, 104) configurés pour être introduits dans des puits (4) d'une plaque (3) afin de laver les puits ;
un réservoir (107) pouvant être rempli d'un fluide ; et
des moyens pour déplacer au moins l'un parmi le distributeur et le réservoir pour positionner les extrémités de la pluralité de tuyaux dans le réservoir ; **caractérisé par**
un transducteur ultrasonique (207) monté sur le réservoir ; et
un système de commande (113, 213), dans lequel lorsque les extrémités de ladite pluralité de tuyaux (102, 104) sont positionnées dans le réservoir (107), le système de commande (113, 213) active le transducteur ultrasonique (207) afin de faire vibrer le fluide dans le réservoir ;
au moins une sonde de détection (300) ou un transducteur (302) qui détermine un niveau de fluide dans l'un ou plusieurs desdits puits de la plaque ; et
des capteurs électroniques (310) qui déterminent si la fonction volumétrique des tuyaux a été altérée en fonction du niveau de fluide détecté, par l'estimation du contenu volumétrique d'un puits (3) en utilisant les sondes de détection individuelles (300) ou les transducteurs (302) pour détecter ainsi un tuyau de distribution altéré (102) ou un tuyau d'aspiration altéré (104).

2. Système selon la revendication 1, dans lequel le système de commande (113, 213) commande le mouvement d'au moins l'un parmi le distributeur (101, 103) et le réservoir (107) afin de positionner les extrémités des tuyaux (102, 104) dans le réservoir.

3. Système selon la revendication 1, dans lequel le système de commande (113, 213) commande automatiquement le mouvement d'au moins l'un parmi l'au moins un distributeur (101, 103) et le réservoir (107) de sorte que la pluralité de tuyaux (102, 104) soient positionnés dans le réservoir, et active automatiquement le transducteur ultrasonique (207) afin de faire vibrer le fluide dans le réservoir.

4. Système selon la revendication 3, dans lequel ladite plaque est une plaque de micro-titration (3).

5. Système selon la revendication 1, dans lequel ladite pluralité de tuyaux comprend une pluralité de tuyaux de distribution (102), où ledit système de commande commande les tuyaux de distribution de sorte que les tuyaux de distribution distribuent le fluide dans le réservoir.

6. Système selon la revendication 5, dans lequel la pluralité de tuyaux comprend en outre une pluralité de tuyaux d'aspiration (104) de sorte que les tuyaux d'aspiration évacuent le fluide du réservoir.

7. Système selon la revendication 1, dans lequel le système de commande (113, 213) est programmé pour commander automatiquement au moins l'une des opérations suivantes : changements de fluide, la durée d'immersion des tuyaux et les moments où les tuyaux sont nettoyés.

8. Système selon la revendication 6, dans lequel le système de commande (113, 213) est programmé pour commander au moins l'une des opérations suivantes : changements de fluide, la durée d'imbibition des tuyaux et les moments où les tuyaux sont nettoyés.

9. Système selon la revendication 1, dans lequel lorsque le transducteur ultrasonique (207) est activé, une tension d'amplitude et de fréquence est appliquée au transducteur ultrasonique afin de faire vibrer le réservoir (107) et entraîne la formation et l'éclatement de petites bulles à travers le fluide nettoyant ainsi les tuyaux (102, 104).

10. Système selon la revendication 9, dans lequel la tension appliquée est de 30 à 300 volts et a une fréquence de 40 à 100 kHz.

11. Système selon la revendication 6, dans lequel le système de commande (113, 213) est programmé pour commander le remplissage et l'évacuation du réservoir (107).

12. Système selon la revendication 1, dans lequel le système de commande (113, 213) est programmé pour commander automatiquement le remplissage et l'évacuation du réservoir (107).

13. Système selon la revendication 12, dans lequel ledit réservoir (107) comprend un orifice de remplissage (313) et un orifice d'aspiration (311), ledit fluide étant introduit dans le réservoir à travers l'orifice de remplissage et ledit fluide étant évacué du réservoir à travers l'orifice d'aspiration, où l'orifice de remplissage est séparé de l'orifice d'aspiration.

14. Système selon la revendication 1, dans lequel lesdits capteurs électroniques (310) permettent automatiquement le nettoyage répété d'au moins l'un parmi ladite pluralité de tuyaux (102, 104) jusqu'à ce que la fonction volumétrique des tuyaux ait été restaurée.

15. Système selon la revendication 1, dans lequel lesdits capteurs électroniques (310) permettent manuellement le nettoyage répété d'au moins l'un parmi ladite pluralité de tuyaux (102, 104) jusqu'à ce que la fonction volumétrique des tuyaux ait été restaurée.

16. Système selon la revendication 1, dans lequel lesdits capteurs électroniques (310) fournissent un procédé de lavage de plaque où une zone désignée de ladite plaque est mise de côté afin de tester la fonction volumétrique des tuyaux.

17. Système selon la revendication 1, comprenant en outre une ligne d'entrée de fluide (203) pour distribuer le fluide à l'au moins un distributeur (103) pour introduire le fluide dans le réservoir (107) et une ligne d'aspiration à vide (201) pour éliminer le fluide de l'au moins un distributeur (101) pour prélever le fluide du réservoir (107).

18. Système selon la revendication 17, dans lequel la ligne d'entrée de fluide (203) et la ligne d'aspiration à vide (103) sont également utilisées pour laver les puits.

19. Système selon la revendication 1, dans lequel le système de commande (113, 213) est programmé pour commander le lavage des puits (4) et le nettoyage des tuyaux (102, 104).

20. Système selon la revendication 19, dans lequel le système de commande (113, 213) est programmé pour commander automatiquement le nettoyage des tuyaux (102, 104) avec un cycle de nettoyage préprogrammé.

21. Système selon la revendication 1, dans lequel la plaque (3) est une matrice de puits (4).
